# EUROPEAN PATENT SPECIFICATION

(11) **EP 1 225 721 B1**
(45) Date of publication and mention of the grant of the patent: **27.04.2016**
(21) Application number: 02250232.2
(22) Date of filing: 14.01.2002
(51) Int. Cl.: H04L 12/24, H04L 12/58, H04L 29/08

(54) **Method and device for network device error notification**
Verfahren und Vorrichtung zum Melden eines Fehlers einer Netzwerkvorrichtung
Procédé et dispositif de notification de faute d'un dispositif de réseau

(30) Priority: 17.01.2001 JP 2001009472; 08.06.2001 JP 2001174167; 23.10.2001 JP 2001324900
(43) Date of publication of application: 24.07.2002
(73) Proprietor: CANON KABUSHIKI KAISHA, Tokyo (JP)
(72) Inventor: Okazawa, Takashi, c/o Canon Kabushiki Kaisha, Tokyo (JP)
(74) Representative: Hitching, Peter Matthew

(56) References cited:
- EP-A- 0 150 273
- EP-A- 0 886 424
- EP-A- 1 003 307
- WO-A-00/35171
- DE-A1- 19 715 668
- US-A- 5 974 372

## Description

### BACKGROUND OF THE INVENTION

### Field of the Invention

The present invention relates to a communication apparatus that controls interfaces between a terminal apparatus and a main apparatus such as a printer and a copying machine on a network, or to a unit provided with such a communication apparatus.

### Related Background Art

Conventionally, a network system is known in which a client computer such as a personal computer (PC) and a peripheral device (device terminal) such as a printer are connected to a network.

A peripheral device consists of a communication device such as a network interface device and the main unit of the peripheral device connected to the network via the network interface device.

The network interface device controls communication of information between the peripheral device and the client computer. If any abnormal condition arises at the peripheral device, the client computer obtains error information via the network interface device, and displays the error through the application software being used to remotely operate the peripheral device.

In addition, the client computer is required to have dedicated application software for the network interface device if the computer is to send a command to the peripheral device from a remote location, for example, to know the state of the peripheral device.

WO 00/35171 A published 15 June 2000 discloses a local exchange that receives from a terminal a language selected by a user, and then generates a text using the received language.

EP-A-1 003 307 published 24 May 2000 discloses a computer that receives an e-mail, and, if the received e-mail is for a device connected to the computer, performs an operation according to the received e-mail for the device.

EP-A-0 886 424 published 23 December 1998 discloses a server computer that receives a user ID from a remotely located computer, chooses a language to use for the user from the received user ID, and sends HTML data displayed in the specified language to the remotely located computer.

US-A-5 974 372 published 26 October 1999 discloses a terminal that receives a translation of text corresponding to an untranslated text from a user, and registers the received translation of text in a translation table. When a message is obtained, the terminal translates the untranslated test included in the obtained message with the translation of text registered in the translation table, and displays the translation on a screen.

### SUMMARY OF THE INVENTION

However, the prior system described above has the following problems.
(1) When an error (abnormal condition) occurs at the peripheral device connected to the network, the only unit that can recognize the occurrence of the error is the client computer utilizing the peripheral device or the client computer on which the dedicated application software is currently running. Other client computers cannot recognize the abnormal condition at the peripheral device.
(2) Even when an error occurs at the peripheral device, if no one is using the peripheral device, the error would not be discovered and left unsolved until someone uses the peripheral device.
(3) Dedicated application software for the network interface device is required in order to send a command to the peripheral device from a remote location. It is impossible to send a command to the peripheral device without this application software being installed on the client computer.
(4) Even when dedicated application software for the network interface device is provided, the user still needs to learn special purpose commands to be able to use the application software. Thus, it is onerous for the user to learn how to operate the software.
(5) when there are a plurality of users using the peripheral device, if the languages used by the respective users are different, it is desirable to communicate information on the peripheral device in respective languages of the users. However, if dedicated application software is to be used, it is necessary to prepare several versions of the dedicated application software adapted for respective languages.

In contrast, the present invention can notify the user of the state of the peripheral device by means of e-mail, thus informing the user responsible for managing the peripheral device of the state of the peripheral device at appropriate time so that the user becomes aware of his management tasks.

In addition, languages to be used in the e-mail can be switched so as to make it easier for the user to understand the state of the peripheral device when the user reads the mail content.

In accordance with the present invention there is provided a communication controller, communication apparatus, transmission method and program as defined in the appended claims.

### BRIEF DESCRIPTION OF THE DRAWINGS

FIG. 1 shows a system architecture of a network system;
FIG. 2 is a block diagram showing a configuration of a network interface unit 106;
FIG. 3 is a flow chart showing normal processing at a network interface unit 106;
FIG. 4 is a flow chart illustrating processing for a mail delivery;
FIG. 5 is a flow chart illustrating processing to create a message;
FIG. 6 is a flow chart illustrating processing to create a header;
FIG. 7 is a flow chart illustrating processing to create a body;
FIG. 8 is a flow chart illustrating processing to create a footer;
FIG. 9 shows an exemplary message for job log notification;
FIG. 10 shows an exemplary message for error log notification;
FIG. 11 shows an exemplary message for reporting an occurrence of an error;
FIG. 12 is a flow chart illustrating processing to send a message;
FIG. 13 shows a constitution of a state change signal (Trap signal);
FIG. 14 shows an exemplary Trap number;
FIG. 15 shows an exemplary status code;
FIG. 16 shows a setting screen for mail delivery related items;
FIG. 17 is a flow chart illustrating processing to create a second message;
FIG. 18 is a flow chart illustrating processing to create a header;
FIG. 19 shows a setting screen for mail delivery related items;
FIG. 20 shows a setting screen for mail delivery related items;
FIG. 21 is a flow chart illustrating processing for setting a language for a message in a case where a setting screen is used;
FIG. 22 shows a table to save the details of setting;
FIG. 23 is a flow chart illustrating processing to create a third message;
FIG. 24 is a flow chart illustrating processing to create a header;
FIG. 25 is a flow chart illustrating processing to create a body; and
FIG. 26 shows an architecture of a laser beam printer.

### DETAILED DESCRIPTION OF THE PREFERRED EMBODIMENTS

In the following, embodiments of the present invention will be described with reference to the drawings.

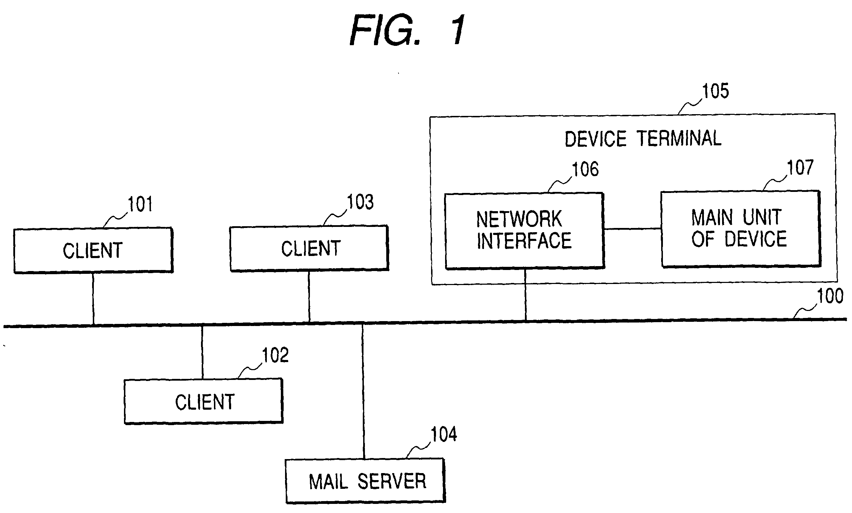

FIG. 1 shows a system architecture of a network system involved in an embodiment of the invention.

In this drawing, reference numerals 101 to 103 denote client computers that consist of personal computers (PCs) and the like. These client computers are connected to a network 100.

Reference numeral 104 denotes an e-mail server (hereafter called mail server). The mail server 104, being connected to the network 100, receives mail messages (hereafter referred to also simply as messages) sent from an external device and retains them. Respective users utilizing the network system have their own e-mail addresses. They inform the mail server 104 of their e-mail addresses by connecting to the server from the client computers 101 to 103. Then, the mail server 104 selects among a plurality of mails those addressed to the e-mail addresses that came to its knowledge, and sends those mails to the client computers.

Reference numeral 105 denotes a device terminal (peripheral device). The device terminal 105, which consists of a network interface unit 106 and a main unit of the device 107, is connected to the network 100 via the network interface unit 106. The device terminal 105 may be an image processing device such as a laser beam printer, an inkjet printer, a copying machine, a FAX machine, or a combination thereof. It may also be a device that can be connected to a network. In this embodiment, as an exemplary device terminal 105, a printer will be described.

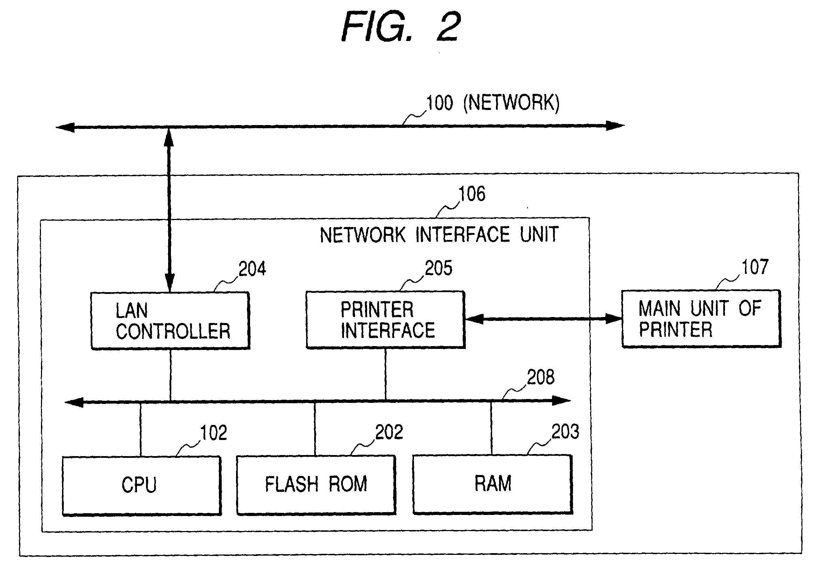

FIG. 2 is a block diagram illustrating a configuration of the network interface unit 106 shown in FIG. 1. In this drawing, reference numeral 201 denotes a CPU. The CPU 201, based on various control programs stored in flash ROM 202, controls communication with the external network 100 as well as communication with a printer interface 205, and also controls operation of the network interface unit 106 as a whole.

The flash ROM 202 is a rewritable ROM, and it is a memory that can be used as a storage area for parameters to be saved. The flash ROM 202, besides being used to store control programs, data, and various parameters to be saved, also saves and stores information representing e-mail addresses and setting information for use in mail processing in the e-mail feature described in the present invention.

Reference numeral 203 denotes RAM. The RAM 203 is used to store temporary work data and parameters. Reference numeral 204 denotes a LAN controller. The LAN controller 204 serves to communicate with the external network 100 (for example, Ethernet (R) and token ring). Through controlling by this LAN controller 204, print data from a client computer connected to the external network 100 is input into the network interface unit 106. Then, data of various information is output to the network 100.

Reference numeral 205 denotes a printer interface. The printer interface 205, for example, sends a printer job input from the external network 100 to the printer 107, receives/sends a printer control job from/to the printer 107, obtains from the printer 107 state information concerning a state of the printer 107, obtains from the printer 107 device information concerning the printer 107, and sends to the printer 107 information representing device settings for the printer 107.

The CPU 201, flash ROM 202, RAM 203, LAN controller 204, and printer interface 205 are connected with each other via a system bus 208.

Furthermore, the network interface unit 106 may be a removable communication control device mounted on a main unit of a device, such as a network card, a network board, and a printer board to name but a few specific examples.

As described above, a peripheral device 105 constituting the present embodiment, consists of a network interface unit 106 and a printer 107 as a main unit of the device in a network system consisting of a mail server 104, clients 101, 102, and 103, and a peripheral device 105.

The network interface unit 106 and the printer 107 are connected by means of a dedicated interface 205. Thus, the network interface unit 106 obtains detailed state information and device information about the printer 107 via this interface 205.

The network interface unit 106 comprises message creating means for creating a notification message based on the detailed state information and device information, retaining means for retaining data concerning recipients of the message created by the message creating means, and message delivering means for sending the message created by the message creating means via e-mail according to the data on recipients.

The peripheral device 105 that consists of such a network interface unit 106 and a printer 107 is provided with means for sending e-mail messages to the mail server 104 on the network 100 at the message delivering means.

The mail server 104 comprises means that receives messages sent from the peripheral device 105 to retain them in the server terminal, and means for sending mails in response to mail receiving requests from the clients 101, 102, and 103, and means for deleting messages retained in the server unit.

In addition, the clients 101, 102, and 103 are provided with means for receiving e-mail messages from the mail server 104 via the network 100. Furthermore, an application program is running on the clients to display received messages.

In a large scale network, a plurality of mail servers are provided with means for communicating with each other on the network, and through this means e-mail messages are transferred. Messages are retained at the destination mail server so that the source mail server discards the messages it has been retaining upon transferring them. As a result, e-mail messages sent from the peripheral device 105 are delivered to delivery destinations set at the peripheral device.

In the following, the operation of the present embodiment will be described in specific terms.

The printer 107 and the network interface unit 106 are connected through a dedicated interface 205, and through this dedicated interface 205, transmission/reception of printer job data, transmission/reception of printer control job data, and transmission/reception of state information and device information concerning the printer 107 are achieved.

With such transmitted/received data, the network interface unit 106 creates messages to be delivered therefrom, and sends them to preset destinations.

The processing to send this notification message starts when the network interface unit 106 detects a state change in the printer 107. That is, the printer 107 is provided with means for notifying the network interface unit 106 of its own state change. In the present example, it is not the network interface 106 that obtains the state information of the printer 107 periodically to monitor its state. Rather, the processing to send a notification message is invoked by a notification from the printer 107 indicating a state change.

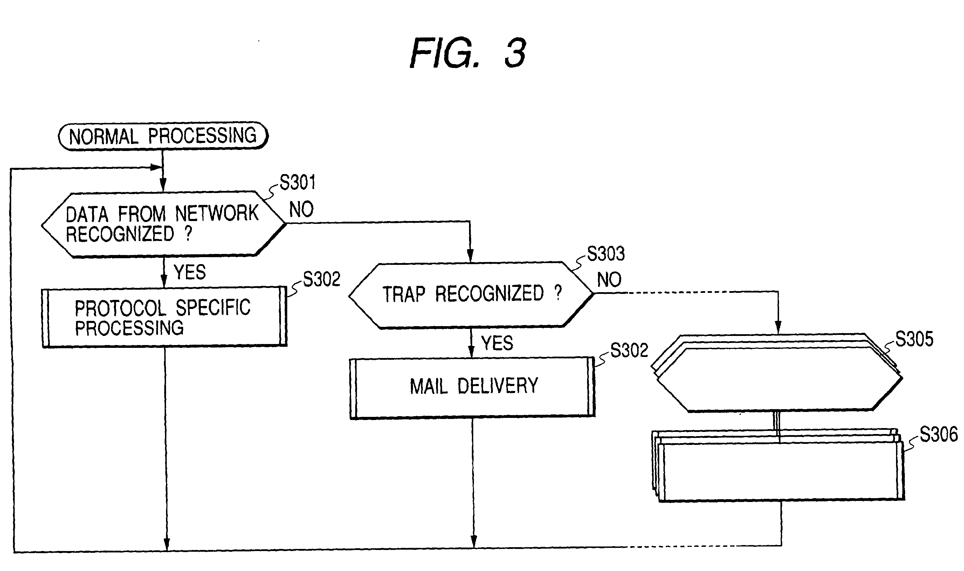

FIG. 3 is a flow chart showing normal processing at the network interface unit (NIC) 106. In its normal processing, the network interface unit (NIC) 106 invokes appropriate processing corresponding to signals from the network 100 and the printer interface 205. After finishing each processing, it returns to a wait state. That is, in response to interruptions from outside, it executes corresponding processing. It also periodically carries out necessary operations for the external network 100.

In FIG. 3, first, whether or not there is data transmission in a network protocol from the network 100 is determined (step S301). If there is data transmission, then in accordance with the protocol used for the data transmission, protocol specific processing is performed (step S302).

If data is not sent from the network, then, whether a signal indicating a state change (hereafter called state change signal) has been received from the printer 107 is determined (step S303). If there is a state change signal (Trap signal) from the printer 107, a specific state change of the printer 107 is recognized, and to send a message representing the details in the form of e-mail, processing to deliver a mail is executed (step S304).

Even in the case where no data is transmitted from the network 100 and no state change signal is sent from the printer's main unit, appropriate processing is executed in S305 and S306 respectively.

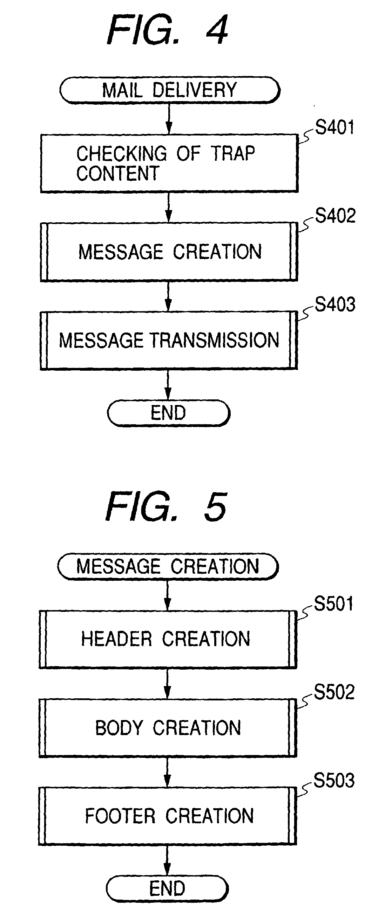

FIG. 4 is a flow chart illustrating processing for delivering a mail in step S304. In the processing for delivering a mail of step 304, first, Trap information content represented by the Trap signal from the printer 107 is analyzed (step S401). Then, a message for notification is created in accordance with the Trap information content (step S402). Finally, the message is sent in the form of e-mail (step S403). Here, a set destination address is attached to the message so that the e-mail representing the Trap information content is sent to a set recipient.

FIG. 5 is a flow chart illustrating processing to create a message in S402. In the processing to create a message of step S402, first, processing to create a header is performed (step S501), then processing to create a body is performed (step S502), and finally processing to create a footer is performed (step S503), a message being constituted by these parts.

The network interface unit 106 constructs a message by combining its own network information with state information and device information obtained from the printer 107 in the processing to create respective parts.

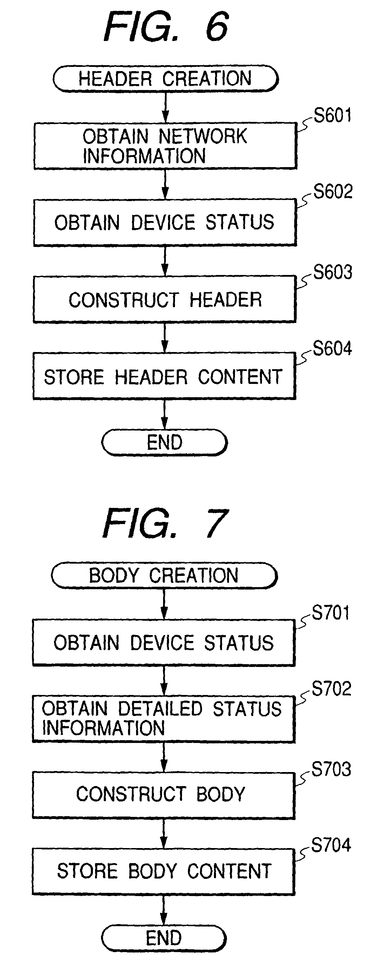

FIG. 6 is a flow chart illustrating processing to create a header in step S501. In the processing to create a header of step S501, first, the network information (a product name, an IP address, a MAC address, etc.) of the network interface unit 106 itself is obtained (step S601).

Then, status information representing a status of the printer 107 is obtained from Trap information, and from this information a status type is determined (step S602). Status types include such states as error, warning, and service request states.

Then, a header is created based on the information obtained in steps S601 and 602 (step S603). For example, the product name and the IP address are embedded in the "From" field representing the source of e-mail. The destination address for a message is written to the "To" field representing the destination of the e-mail. In addition, a title showing the type of status determined is embedded in the "Subject" field representing the subject of the e-mail. Finally, the content of the created header is stored (step S604).

FIG. 7 is a flow chart illustrating processing to create the body in step S502. In the processing to create the body of step S502, first, status information stored in Trap information is obtained (step S701). In addition, detailed device information (detailed status information) is obtained from the printer 107 (step S702).

Then, the content for the message is created based on that detailed information, and embedded in the body (step S703). Finally, the content of the created body is stored (step S704).

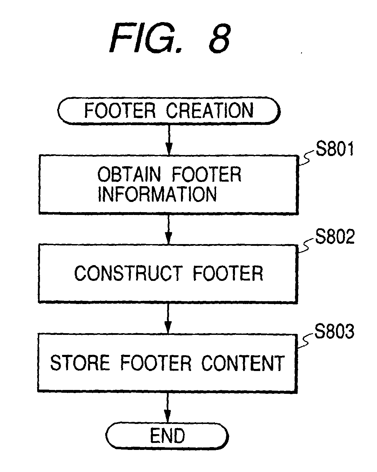

FIG. 8 is a flow chart illustrating processing to create the footer in step S503. In the processing to create the footer of step S503, first, necessary information is obtained from the printer 107 (step S801), and based on the obtained information, the footer is created (step S802) by constructing the part to be appended to the end of the message (such as the one describing a device name, a device location, and so on) and a signature character string that may be set freely. Finally, the content of the footer is stored (step S803).

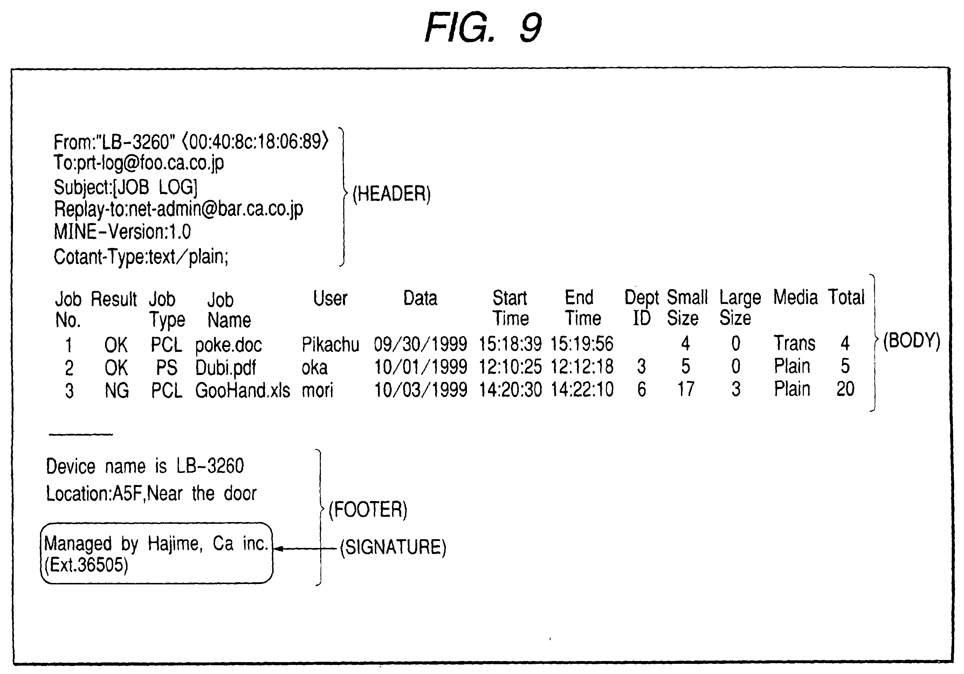

FIGS. 9, 10, and 11 show messages for the e-mail involved in the present embodiment. These messages consist of a header, a body, and a footer. FIG. 9 is a message for job log notification. The description in the Subject field of the header shows that this message is for job log (history) notification. In the body, a job number, a processing result, a job type, a job name, a job user (sender), a time and date when the job was processed, as well as the start time and finish time for the job processing are written for each job processed.

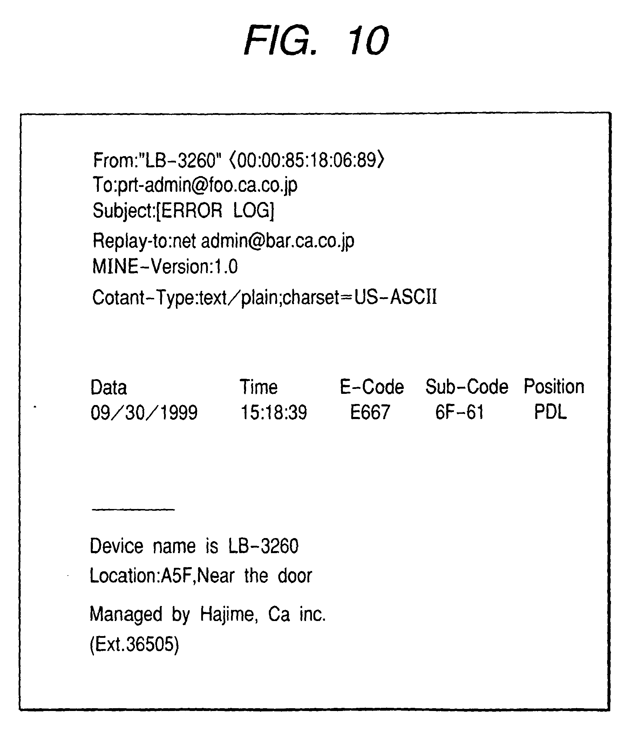

FIG. 10 shows a message for error log notification. The description in the Subject field of the header shows that this message is for error log notification. In the body, the date of occurrence, the time of occurrence, the code and subcode for the error that occurred, and the place of occurrence, etc. are written.

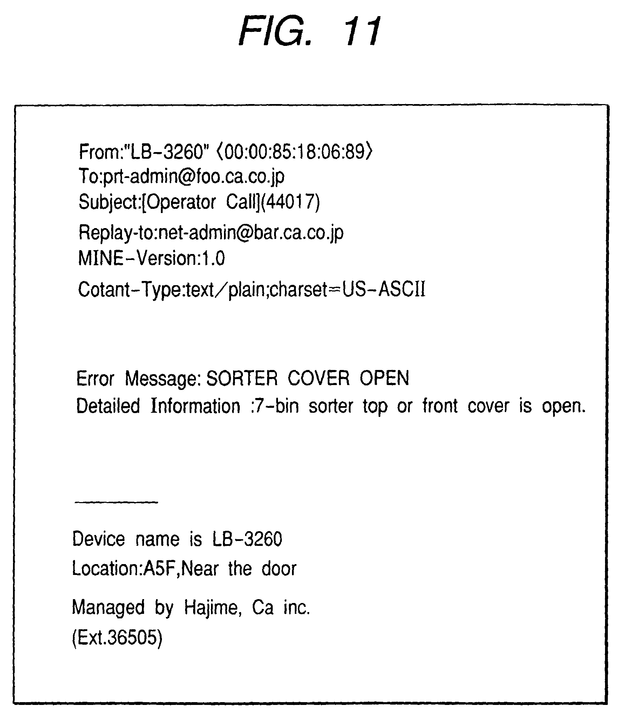

FIG. 11 shows a message for error occurrence notification. The description in the Subject field in the header shows that this message is for error notification. Particularly, in this example, an occurrence of an operator call is described. In the body, a sentence describing the details of the error is written.

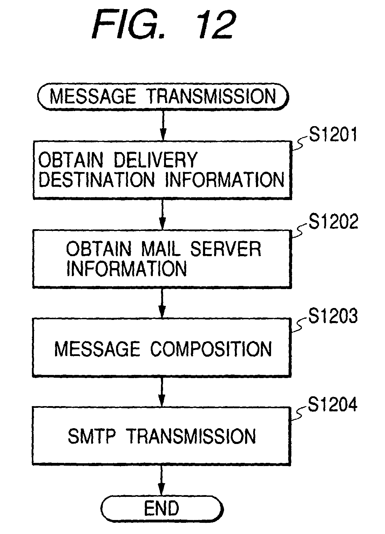

FIG. 12 is a flow chart illustrating processing to send a message in step S403. In the processing to send a message of step S403, first, information that indicates recipients of the mail preset in the network interface unit 106 as well as information concerning the mail server is obtained (steps S1201 and S1202). Then, a message as shown in FIGS. 9 and 10 is created by combining the header, the body, and the footer (step S1203).

Then, the message is sent to the mail server (step S1204) by means of an e-mail delivering protocol called SMTP (Simple Message Transfer Protocol). E-mail delivery of the present embodiment consists in sending a message to the mail server 104 as described above. The network interface unit 106 may bear the feature of the mail server.

Thus, in this embodiment, since information concerning an error and a status of the device 107 is delivered as e-mail by the device terminal 105 itself, dedicated application software for the network interface unit 106 is not required at the client computers 101 to 103, eliminating the need for the user to learn how to operate the application software. Therefore, an excessive burden of operating the software is not put on the user.

Also, when an error occurs at the main unit of the device 107, information concerning the error may be delivered to the plurality of client terminals 101 to 103 via the mail server 104 easily and rapidly, thus allowing the occurred error to be dealt with in a timely manner.

As explained in the embodiment, a message is created and delivered in response to a state change signal (Trap signal) from the printer 107. The message to be delivered is created in accordance with the content of this signal. However, in the following embodiment, the type of mail to be delivered is controlled in accordance with set values (notification conditions) in the network interface unit 106 when such a Trap signal is recognized by the network interface unit 106.

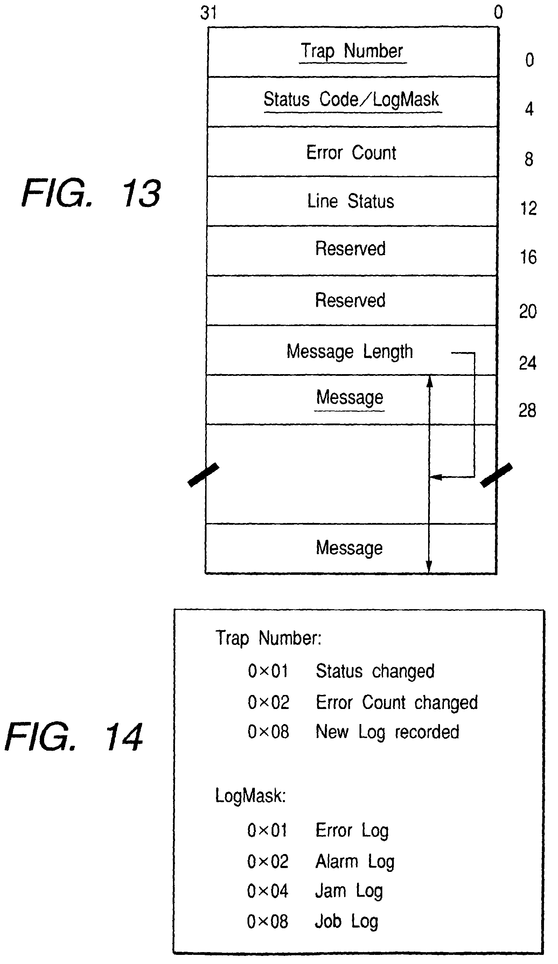

FIG. 13 shows a constitution of a Trap signal. A Trap signal contains a Trap number, a Status Code, and a Message being displayed on the printer panel (panel message character string).

A Trap number represents a type of state change for the printer 107, and includes termination of a job, a status change, log area overflow, and various events.

A status code represents a type of status for the printer 107. A status code is represented as a five-digit positive number to identify any status that occurs at the printer 107. Numbers within a certain range are assigned depending on the type of status. For example, numbers from 10,000 to 14,999 represent normal states (non-error state, non-warning state), those from 15,000 to 20,000 warning states, those from 30,000 to 49,999 error states, and those from 50,000 to 59,999 serviceman call states.

Consequently, different levels may be defined according to status code ranges as follows: level 1 for 10,000 to 14,999; level 2 for 15,000 to 19,000; level 3 for 20,000 to 29,999; level 4 for 30,000 to 49,999; level 5 for 50,000 to 59,999.

A panel message character string represents a character string to be displayed on the panel of the printer 107 at the occurrence of a status.

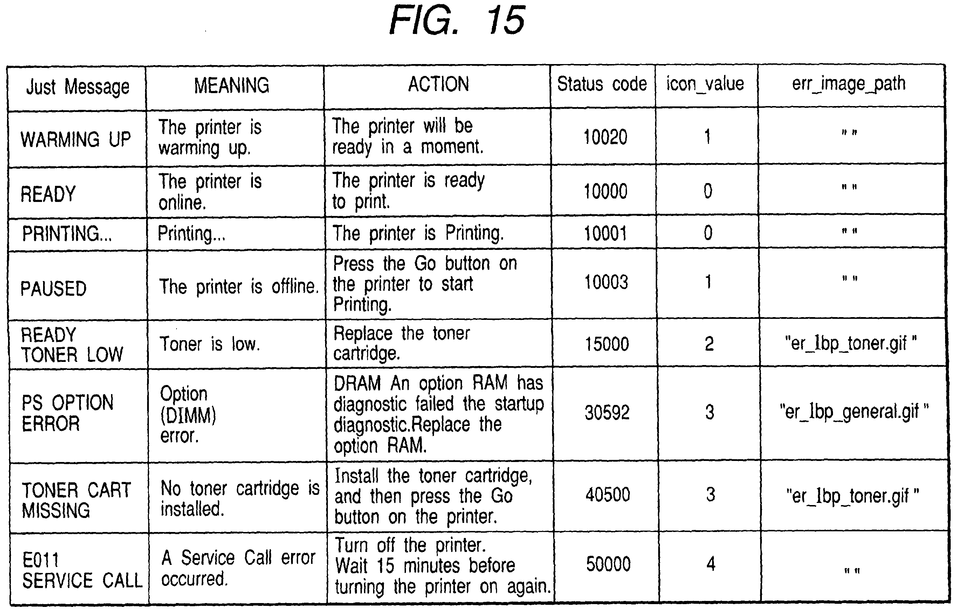

FIG. 14 describes values that may become Trap numbers as well as exemplary state changes corresponding to respective values. FIG. 15 describes values that may become status codes, exemplary panel message character strings corresponding to the respective values, and exemplary status meanings corresponding to the respective values.

The network interface unit 106 controls the mail delivery by utilizing Trap numbers and state levels shown by status codes. The set values representing the conditions for delivering mail are stored in the network interface unit 106. In the following, those notification conditions will be described.

Types of mail to be delivered include the followings: 1. job log notification; 2. error log notification (normal error, serviceman call); 3. notification for an occurrence of an operator call and notification for an occurrence of a service call; and 4. notification for an occurrence of a call requesting consumable item replacement.

Job log notification represents a case where the Trap signal is for "log information." Log information is sent from the printer 107 to the network interface unit 106 as a Trap signal each time processing of a job is finished. The network interface unit 106 accumulates the log information over several times of transmission, and when a predefined count has been reached, it transmits a message containing the log information.

Service call log notification represents a case where the Trap signal is for both "log information" and a "service call." Log information for service calls is kept at the printer 107, and when the area assigned for the purpose overflows, this type of Trap is generated. The network interface unit 106 obtains log information for service calls from the printer 107 in response to generated Trap signal and sends a message containing the log information.

Error log notification is similar to service call log notification. However, the difference is that in the case of errors involved in error log notification, recovery from those states may be accomplished by the operator (user), whereas errors in service call log notification require replacement of items by a serviceman of the dealer or the like for a recovery.

Both notification for occurrence of an operator call and notification for occurrence of a service call represent cases where Trap signals are for "status changes." In response to generated Trap signal, the network interface unit 106 checks the level of the status code to determine if it is either an operator call or a service call. If either an operator call or a service call has been generated, the network interface unit 106 further obtains detailed error information from the printer 107, and sends a message containing the information. Also, if the level of the status code is for a "request for consumable item replacement," it sends a notification for an occurrence of a call requesting consumable item replacement in a similar manner. Here, requests for consumable item replacement include requests indicating needs for replacement, replenishing, ordering, and adding of consumable items. Also, consumable items include paper, toner, ink, staples, and the like.

Next, a method of setting notification conditions will be described.

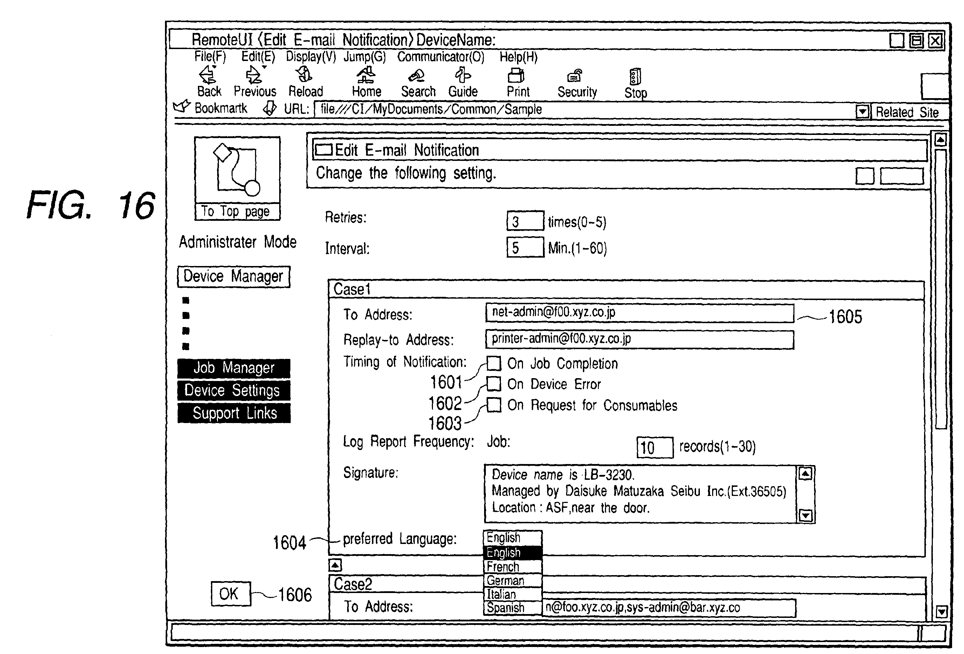

FIG. 16 shows a setting screen for mail notification related items. By placing checkmarks in checkboxes 1601 to 1603, job log notification (for job termination notification), error log notification, and notification for an occurrence of a call requesting consumable item replacement will be performed. Checkboxes respectively corresponding to notification for an occurrence of an operator call and notification for an occurrence of a service call may also be provided though they are not shown here.

Thus, in this embodiment, mail delivery may be controlled by means of Trap numbers and state levels of status codes. For example, a notification level may be set so that among errors that occurred at the device, those beyond a certain level will be recognized and reported.

The screen view shown in FIG. 16 is described in a language such as HTML (Hyper Text Markup Language), and displayed to the user through a predetermined browsing software (such as a web browser). In response to a request from an external device, the network interface unit 106 sends data describing a screen of FIG. 16 to the external device. At the external device, the data is analyzed by a browsing software running on the device and a screen view is displayed as shown in FIG. 16 in accordance with the description.

In the example of FIG. 16, two locations may be set as destinations for mail, and notification conditions may be set for respective destinations. Also, signature information (Signature) and a mailing language (Preferred Language) may be set. A mailing language is a language to be used in describing the body of a message to be sent.

In the embodiment, the network interface unit receives state change signals from the main unit of the printer, analyzes the signals, and then changes message contents accordingly. However, as e-mail is coming to be used across the world, not necessarily a single language is used by all the users receiving e-mail. In other words, not only a message content, but also the language to be used in describing a message has to be changed depending on the user.

In the following, in creating a message, the network interface unit obtains locale information of the printer 107, and changes the language to be used in the body of a message based on the information. Here, "locale information" is used to refer to information indicating locations where the printer 107 is used, where it is produced, to which it is shipped, and where it is sold. For example, an ID (identifier) may be assigned to each country to be set as locale information. Locale information may be set from the printer panel of the printer 107, or it may be set at the time of manufacturing.

In creating a message, the network interface unit 106 inserts into the message not only a sentence prepared in advance based on state information and device information obtained from the printer 107, but also network information from the network interface unit 106 itself. In the following, the network interface unit 106 determines a language for a message based on locale information obtained from the printer 107 in the processing to create a message.

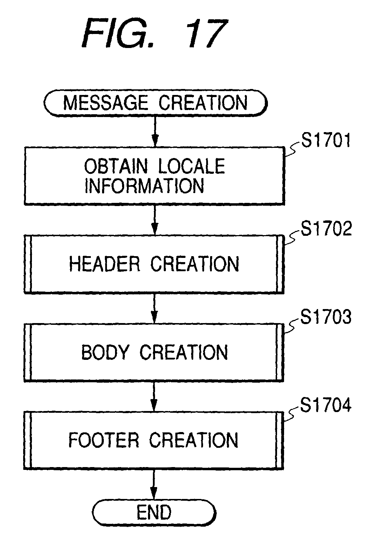

FIG. 17 is a flow chart illustrating processing to create a second message. First, the network interface unit 106 obtains locale information from the printer 107 (step S1701). Then, based on the locale information, it executes processing to create a header (step S1702), processing to create a body (step S1703), and processing to create a footer (step S1704).

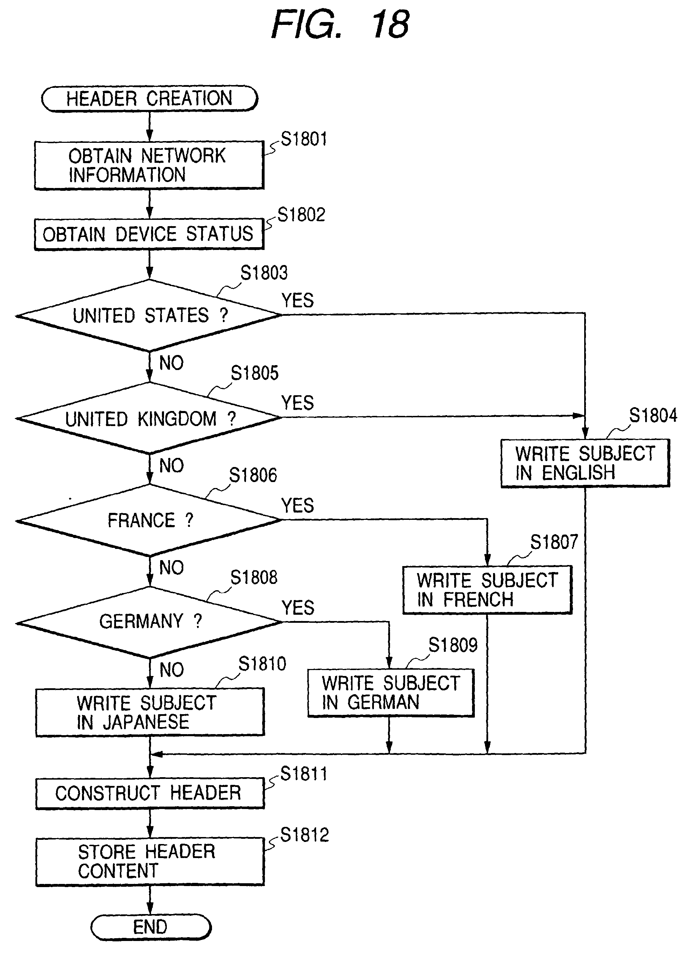

FIG. 18 is a flow chart illustrating the processing to create a header in step S1702. The network interface unit 106 obtains its own network information (a NIC device name, an IP address, and a MAC address, etc.) (step S1801).

Next, it obtains status information representing a status of the printer 107 from Trap information, and determines the type of status from the information (step S1802). Then, it determines which country is indicated by the locale information obtained in S1701.

First, whether the United States is indicated is determined (step S1803). If the United States is indicated, the subject is written in English (step S1804). Then, whether the United Kingdom is indicated is determined (step S1805). Also if the United Kingdom is indicated, the subject is written in English (step S1804).

Next, whether France is indicated is determined. If France is indicated, the subject is written in French (step S1807). Then, whether Germany is indicated is determined (step S1808). If Germany is indicated, the subject is written in German (step S1809). When none of the above mentioned countries is indicated, the country is determined to be Japan, and the subject is written in Japanese (step S1810).

Then, the header is completed (step S1811), and the content of the created header is stored (step S1812).

Locale information is not limited to an ID indicating a country. It may also be information indicating a language to be used for panel display on the printer 107 (panel display language information). This information may be obtained from the printer 107. The panel display language information indicates Japanese, English, French, German, or the like. The network interface unit 106 creates a message content based on the panel display language information as the case shown in FIG. 17.

Also, rather than locale information, information indicating a shipping destination for the printer 107 (shipping destination information) may be used. As shipping destination information is stored in the printer 107, the network interface unit obtains it from the printer 107, and determines a language to be used for creating a message based on the information. For example, if the indicated shipping destinations are Europe, North America, and Japan, respective languages for creating messages will be English, English, and Japanese respectively. Of course, for Europe, messages may be created in French, German, Spanish, Italian, and the like.

Also, rather than locale information, information indicating a product name for the printer 107 may be used. A different number or name may be assigned as a product name depending on the region where the product is sold. Thus, taking advantage of the fact, it is possible to change a language for a message. That is, the network interface unit 106 obtains a product name for the main unit of the printer, recognizes the product name of the main unit of the connected printer, and changes a language for a message to be created based on the information.

In many cases, the network interface unit is capable of operating for main units of devices of different types. Also in such cases, it may perform similar control operations, obtaining product names of its connected main units of devices. It determines a product name to change a language for each case, the main unit of a device having a printer feature, a FAX feature, or a copy feature.

Also, rather than locale information of the printer 107, locale information of the job that generated a notification via e-mail may be used. Locale information of a job is contained in the job, and can be set for each job. Specifically, locale information of application software that issued a job, locale information of a printer driver that issued a job, or the like may be contemplated for use.

In such a case, locale information is contained in settings of application software or a printer driver, and it is automatically embedded in a job from the application software or the printer driver. Alternatively, application software or a printer driver may obtain locale information from the host computer on which it is running and embed it in a job while generating a job. The printer 107 extracts the embedded locale information while analyzing the job and stores it.

A language for a message may be determined based not on locale information of the printer 107, but on a character code of information on the owner who generated a job. For example, if the owner name is written in US-ASCII, a message is created in English, and if it is in ISO-2022-JP, a message is created in Japanese. If it is in ISO-8859-1, English is used to create a message.

A language for a message may be changed by referring not to locale information of the printer 107, but to a value set in a network interface unit 106 such as a network board.

A language may be automatically changed based on a domain name (FQDN: Fully Qualified Domain Name) for the e-mail address of the recipient. A domain name is typically set in such a form as "xyz.co.jp", "xyz.com", or "xyz.fr.ca.de". Therefore, a message is created in a language selected by taking a look at the last character string of this domain name, and selecting Japanese for jp, English for com, French for fr, and German for de.

It is also possible to use locale information of the host computer at which settings for a network interface unit such as a network board are made. Specifically, locale information of the OS (Operating System) running on the host computer, or locale information of the browsing software running on the OS may be obtained to select a language based on the information.

An arrangement may be made allowing a language for a message to be set in accordance with its content. For example, if a message is reporting an error, the message is written in English, while in the case of a message reporting a need to replace a consumable item, the message is written in French. In this manner, even when the language used by the person who handles errors is different from the one used by the person who replaces consumable items, a message can be sent in an appropriate language selected for each individual. For example, if the office in which the device is used is in a French speaking region, and if the servicing company to handle errors is in an English speaking region, a message in French for consumable item replacement is sent to someone in the office, and an error message in English is sent to the servicing company.

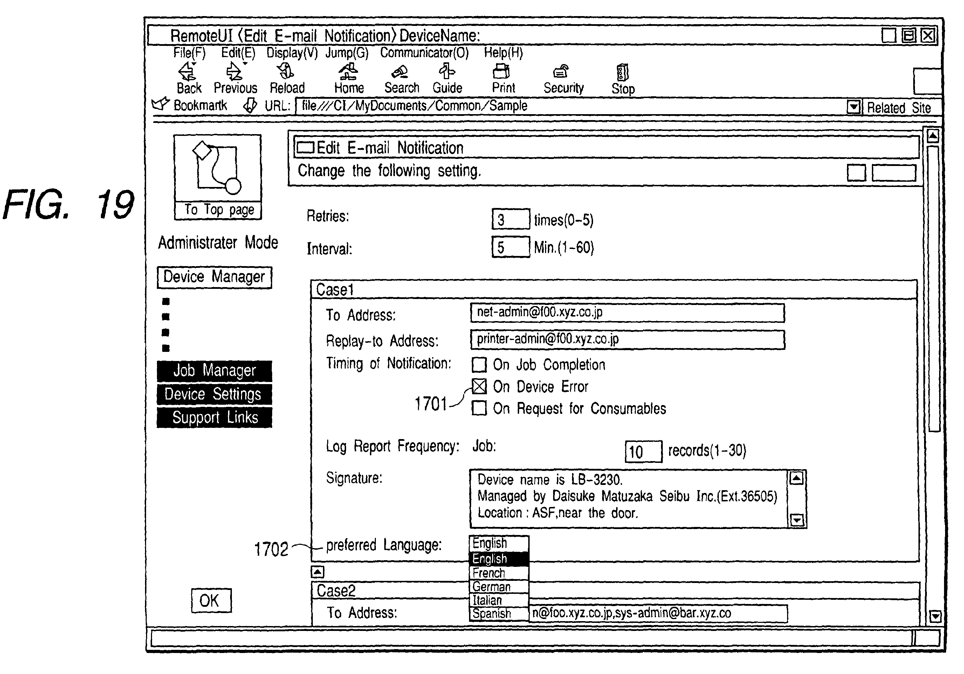

FIG. 19 illustrates a setting screen similar to the one in FIG. 16. In "Case 1" in FIG. 19, a checkmark is placed in a checkbox 1701 for "On Device Error," and in a "Preferred Language" field 1702, "English" is selected. Then, in response to an occurrence of an error at the printer 107, the network interface unit 106 creates a message in English and sends it to a set destination as e-mail.

In "Case 2" in FIG. 19, a checkmark is placed in a checkbox "On Request for Consumables," and "French" is selected in a "Preferred Language" field. Then, the network interface unit 106 creates a message in French when there is a need for consumable item replacement, and sends it to a set destination.

Also, an arrangement may be made allowing a language for a message to be set in accordance with the destination of the message. For example, a message is created in English to be sent to "net-admin@f00.xyz.co.jp", while a message is created in French to be sent to "sys-admin@f00.xyz.co.jp." In this manner, even when the language used is different depending on the recipient of a message, a message can be sent in an appropriate language selected for each individual.

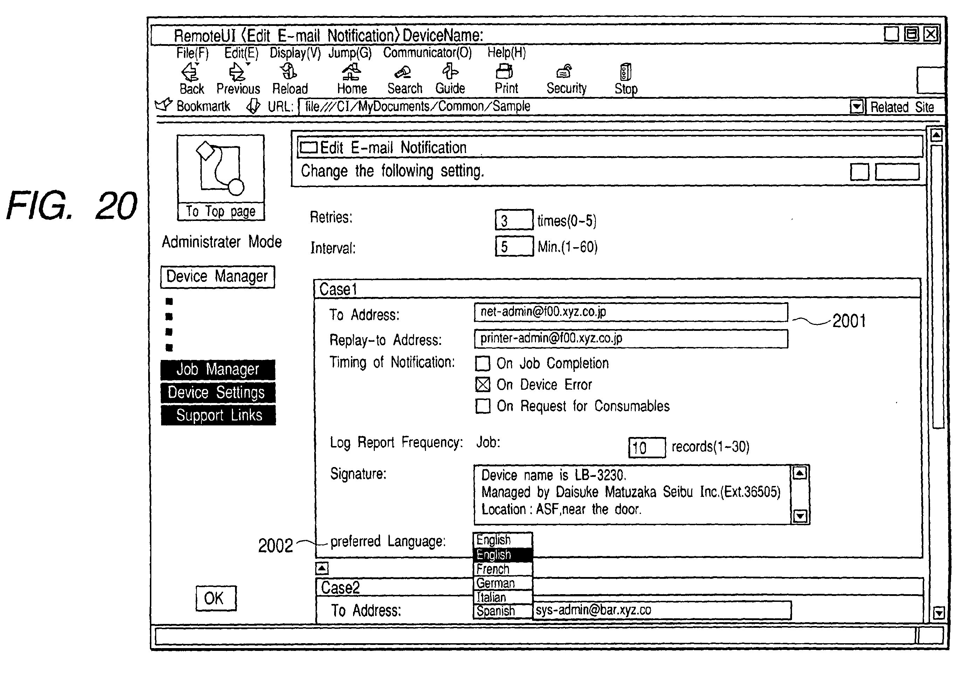

FIG. 20 illustrates a setting screen similar to the one in FIG. 16. In "Case 1" in FIG. 20, "net-admin@f00.xyz.co.jp" is set in a message destination field 2001, and "English" is selected in a "Preferred Language" field 2002. Then, when sending a message to the destination "net-admin@f00.xyz.co.jp", the network interface unit 106 uses English to create it.

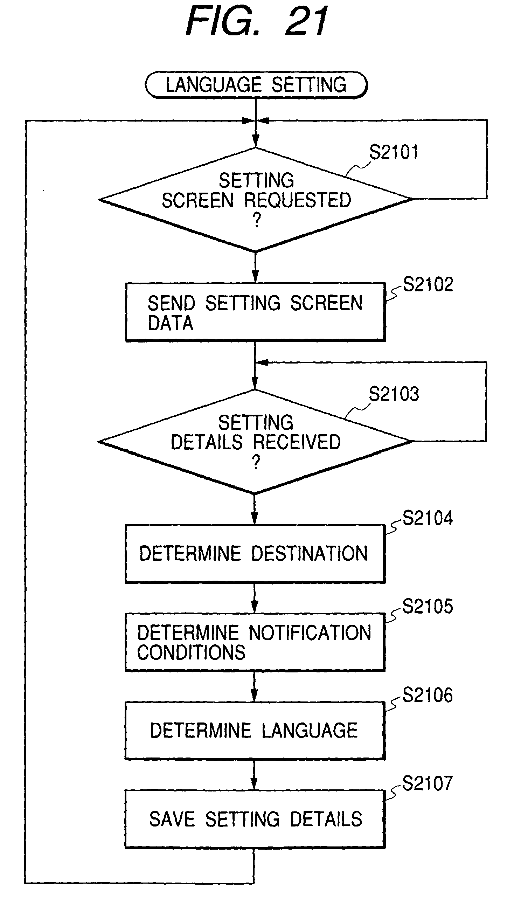

FIG. 21 is a flow chart illustrating processing for setting a language for a message in a case where a setting screen in FIG. 16 (including a setting screen in FIG. 19 or 20) is used. First, whether or not a request command has been sent from an external device is determined (step S2101), requesting HTML data describing the screen view of FIG. 16. If there is a request command, HTML data describing the screen view of FIG. 16 is sent to the external device (step S2102). Here, the network interface unit 106 sends the data using HTTP (Hyper Text Transfer Protocol).

At the external device, a browsing software analyzes the HTML data and displays the setting screen of FIG. 16 on a display unit. The user inputs an e-mail address the destination in a "To Address" field 1605. Then, checkmarks are placed in checkboxes 1601 to 1603 in order to select types of message to be sent (and when to send them). Here, it is possible to place checkmarks in a plurality of checkboxes. A language is selected in a "Preferred Language" field 1604. After inputting the remaining settings, the user presses an "OK" button 1606 at the end. Then, the external device transmits data representing the details of the input settings to the network interface unit 106.

The network interface unit 106 determines whether or not the data representing the details of settings has been received from the external device (step S2103). If it has been received, the network interface unit extracts a destination e-mail address from the data, and determines a destination (step S2104). Then, it determines which one(s) among the checkboxes 1601 to 1603 is selected to decide communication conditions. Then, based on the data representing the details of settings, it determines a language that has been selected. Finally, it stores information representing the details of determination in a memory to save the details of settings (step S2107).

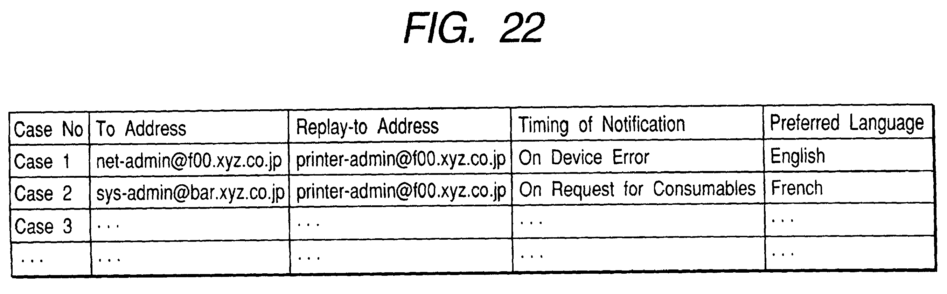

FIG. 22 shows a table to save the details of settings. This table is stored in a nonvolatile memory such as flash ROM 202. In the table shown in FIG. 3, for each case, a destination e-mail address for a message (To Address), a reply e-mail address for a message (Reply-to-Address), a condition for delivering a message or timing of notification (Timing of Notification), and a language to be used for a message (Preferred Language) are stored. A plurality of values may be stored in each field if necessary.

For example, in "Case 1," when an error occurs at the printer 107, a message in English is sent to "net-admin@f00.xyz.co.jp" as e-mail. In "Case 2," when a need to replace a consumable item arises, a message in French is sent to "sys-admin@bar.xyz.co.jp" as e-mail.

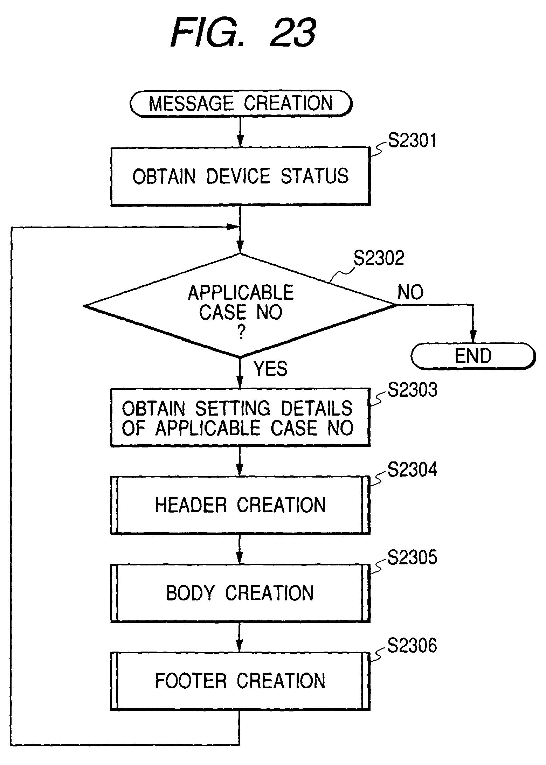

FIG. 23 is a flow chart illustrating processing to create a third message. First, the network interface unit 106 obtains status information from the printer 107 (step S2301).

Then, based on the details of the error indicated by the status information, the network interface unit 106 looks up the table in FIG. 22. Specifically, based on the details of the error indicated by the status information, it checks the "Timing of Notification" field to see if there is a Case No that requires a delivery of message (step S2302).

If there is such a Case No, then setting details corresponding to the Case No are retrieved from the table (step S2303). In the following, processing to create a header (step S2304), processing to create a body (step S2305), and processing to create a footer (step S2306) will be performed.

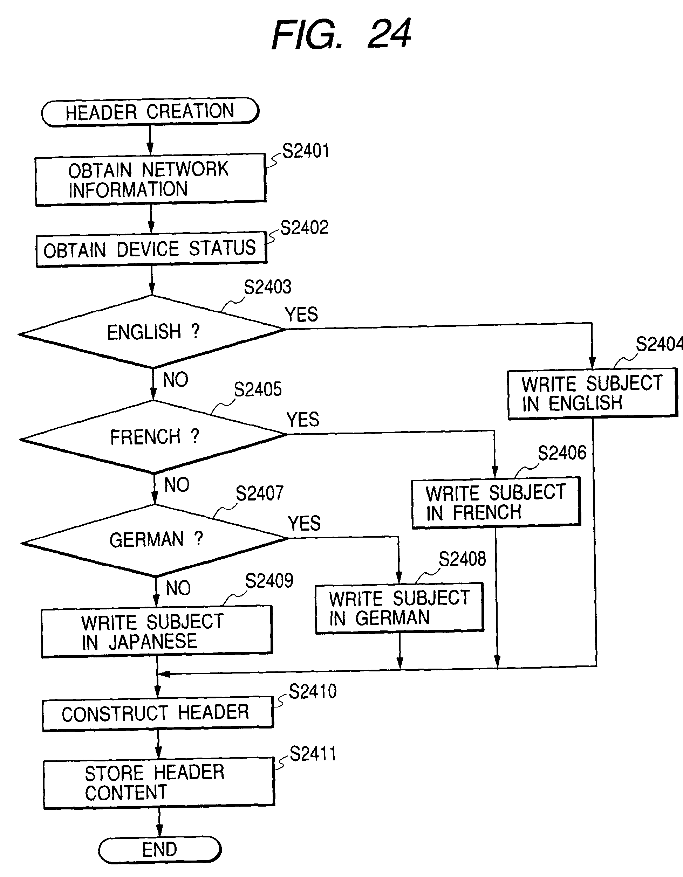

FIG. 24 is a flow chart illustrating processing to create a header in step S2304. The network interface unit 106 obtains its own network information (a NIC device name, an IP address, and a MAC address, etc.) (step S2401).

Then, the network interface unit 106 obtains status information representing a status of the printer 107 from a Trap information, and determines the type of status based on the information (step S2402). Then, it looks up the table in FIG. 22 to determine which language is set in the "Preferred Language" for the Case No.

First, whether the "Preferred Language" indicates English or not is determined (step S2403). If English is indicated, the subject is written in English (step S2404). Then, whether it indicates French or not is determined (step S2405). If French is indicated, the subject is written in French (step S2406).

Then, whether the "Preferred Language" indicates German or not is determined (step S2407). If German is indicated, the subject is written in German (step S2408). If the language indicated is none of the above, it is determined to be Japanese, and the subject is written in Japanese (step S2409).

Then, the header is completed (step S2410), and the content of the created header is stored (step S2411).

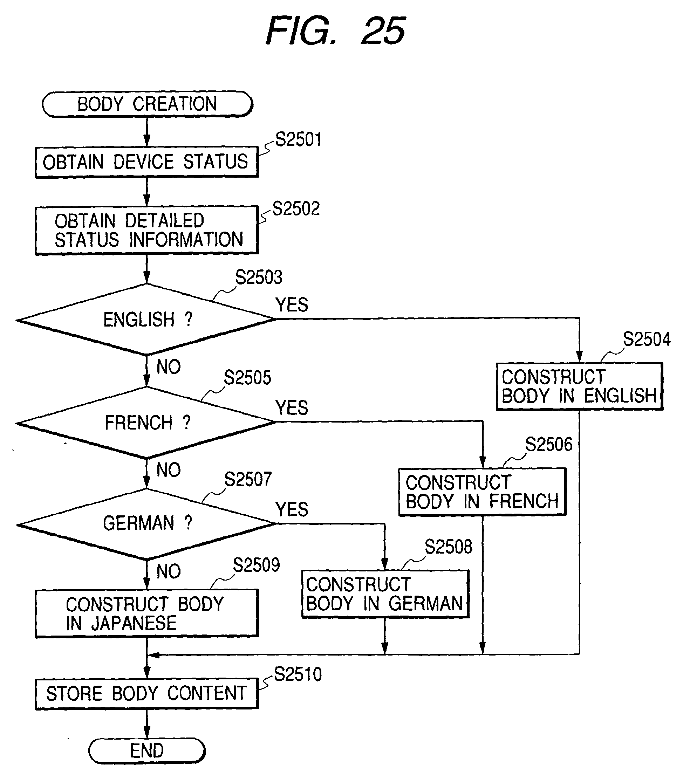

FIG. 25 is a flow chart illustrating processing to create a body in step S2305. First, status information stored in Trap information is obtained (step S2501). In addition, detailed device information (detailed status information) is obtained from the printer 107 (step S2502).

Then, by looking up the table in FIG. 22, a language set in the "Preferred Language" for the Case No is determined.

First, whether the "Preferred Language" indicates English or not is determined (step S2503). If English is indicated, a message content is created in English based on the detailed information (step S2504). Then, whether it indicates French or not is determined (step S2505). If French is indicated, a message content is created in French based on the detailed information (step S2506).

Then, whether the "Preferred Language" indicates German or not is determined (step S2507). If German is indicated, a message content is created in German based on the detailed information (step S2508). If the language indicated is none of the above, it is determined to be Japanese, and a message content is created in Japanese based on the detailed information (step S2509).

Then, the content of the created body is stored (step S2510).

Thus, a message can be created and sent so as to allow the recipient of the message to easily understand information on a peripheral device as well as its state. Particularly, even when different individuals deal with errors depending on details of errors that occurred at the peripheral device, a message can be sent to an individual to deal with an error in a language the individual understands by changing a language for creating a message depending on the destination or the message content based on the details of settings.

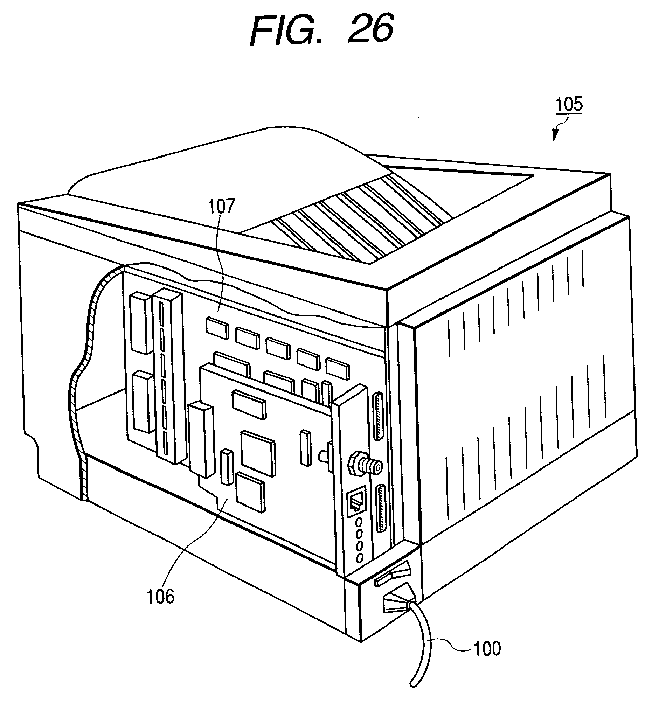

FIG. 26 shows an architecture of a laser beam printer to which the present invention may be applied. Preferably, the network interface unit 106 may be inserted into an internal expansion I/O slot of the laser beam printer 105, allowing the unit to be integrated in the printer.

The invention is not limited to the device according to the embodiments. The invention may be applied to a system that consists of a plurality of devices, or to an apparatus consisting of a single device. A storage medium storing software program code embodying the features of the embodiments may be supplied to a system or device. In such a case, needless to say, the invention may be accomplished by the program code stored on the storage medium being read and executed by a computer (CPU or MPU) of the system or apparatus.

Specifically, program code based on the flow charts of FIGS. 3 to 8, FIGS. 12, 17, 18, 21, and FIGS. 23 to 25 may be stored in the flash ROM 202 within the network interface unit 106. The controlling method may be accomplished by the CPU 201 of the network interface unit 106 performing control operations in accordance with the program code.

In such a case, the program code itself read from the storage medium embodies the features of the embodiments, thus, the storage medium storing the program code or the program code itself constituting the invention.

As a storage medium for supplying program code, for example, a floppy(R) disk, a hard disk, an optical disc, a magneto-optical disk, CD-ROM, CD-R, magnetic tape, a nonvolatile memory card, ROM, DVD-RAM, or DVD-ROM may be used. The features of the embodiments may be accomplished not only by a computer reading and executing program code, but also by an OS running on the computer based on instructions from the program code, part or the whole of actual processing being performed by the OS. Needless to say, the invention includes a case where the features of the embodiments are embodied by such processing.

Furthermore, program code read from a storage medium may be written to a memory on a feature expansion board inserted into a computer or on a feature expansion unit connected to a computer so that the expansion features may be performed by a CPU on the expansion board or unit based on subsequent instructions from the program code, thus part or the whole of actual processing being performed by the CPU. Needless to say, the invention includes a case where the features of the embodiments are embodied by such processing.

As described above in detail, according to the invention, the need for dedicated application software may be eliminated by delivering to the user information on the peripheral device or its state via e-mail.

For example, the user is not required to install dedicated application software and thoroughly learn how to operate it. In other words, information on a peripheral device connected to the network and the state of the device may be communicated to the user without putting an excessive burden of operating the software on the user.

Also, the user may read a message indicating information on a peripheral device or the state of the device at appropriate time without running dedicated application software all the time.

Also, information on a peripheral device or the state of the device may be communicated to a plurality of terminal apparatuses on the network easily and rapidly by means of e-mail. Therefore, the user may deal with an error that occurred in a timely manner.

Also, by controlling transmission of messages in accordance with the state level of the peripheral device, a selection can be made among errors that occurred at the peripheral device so that errors above a certain level may be reported.

In addition, by switching a language to be used for a message, information on a peripheral device or the state of the device may be made easily understandable for the recipient of the message.

For example, even when different individuals are dealing with errors depending on the details of the errors that occurred at the peripheral device, a message can be sent to an individual to deal with an error in a language the individual understands.

Also, in accordance with the country, the region, or the environment in which the main unit of the peripheral device is used, messages may be sent in a language used in the country, the region, or the environment.

## Claims

1. A communication controller (106) for controlling communication between an apparatus (107) and a computer (101) via a network, comprising:
data sending means (204) for sending, to the computer via the network, data for enabling a user of the computer, by using a browsing software running on the computer, to input a destination to which a message is to be transmitted from said communication controller and to select one of a plurality of languages which are available in the communication controller to create the message, in response to a request from the computer to send the data;
receiving means (204) for receiving, from the computer via the network, destination data indicating a destination input by the user in the browsing software and language data indicating a language selected by the user based on the data sent to the computer by the data sending means;
obtaining means (205) for obtaining information concerning a status of the apparatus;
message creating means (102) for creating a message, based on the information obtained by said obtaining means, in the language indicated by the language data received by said receiving means; and
transmitting means (204) for transmitting the message created by said message creating means to the destination via the network based on the destination data received by said receiving means.

2. The communication controller according to claim 1, wherein said message creating means is arranged to insert a sentence prepared in advance into the message based on the information obtained by said obtaining means.

3. The communication controller according to claim 1 or 2, wherein said controller is a network board mounted on the apparatus.

4. The communication controller according to any one of claim 1 to 3, wherein the message is an e-mail message.

5. The communication controller according to any one of claim 1 to 4, wherein the browsing software is a web browser and the data sent by said data sending means is described in Hyper-Text Markup Language.

6. The communication controller according to any one of claim 1 to 5, wherein said data sending means is arranged to send data for enabling the browsing software to display a screen on which the user can select the language from a list, input the destination of the message, and select a condition from a list of a plurality of conditions on which the message is to be transmitted, wherein said receiving means is arranged to receive the language data, destination data indicating the destination entered by the user, and condition data indicating the condition selected by the user, wherein said transmitting means is arranged to transmit the message created by said message creating means to the destination indicated by the destination data received by said receiving means if the information obtained by said obtaining means satisfies the condition indicated by the condition data received by said receiving means.

7. The communication controller according to any one of claim 1 to 6, wherein
said data sending means is arranged to send the data for enabling the user of the computer to input a plurality of destinations,
said receiving means is arranged to receive a plurality of destination data respectively indicating a plurality of destinations input by the user of the computer, and
said transmitting means is arranged to transmit the message created by said message creating means to the plurality of destinations respectively based on the plurality of destination data received by said receiving means.

8. The communication controller according to claim 7, wherein
said data sending means is arranged to send the data for enabling the user of the computer to select one of a plurality of languages respectively corresponding to the plurality of destinations,
said receiving means is arranged to receive a plurality of language data indicating a plurality of languages respectively corresponding to the plurality of destinations selected by the user of the computer,
said message creating means is arranged to create the plurality of messages respectively corresponding to the plurality of destinations in the plurality of languages indicated respectively by the plurality of language data received by said receiving means, and
said transmitting means is arranged to transmit the plurality of messages created by said message creating means respectively based on the plurality of destination data received by said receiving means, to the plurality of corresponding destinations respectively.

9. The communication controller according to any one of claim 1 to 8, wherein
said data sending means is arranged to send the data for enabling the user of the computer to select one of a plurality of message notification conditions,
said receiving means is arranged to receive message notification condition data indicating the message notification condition selected by the user of the computer,
said message creating means is arranged to create the message corresponding to the destination in a case where the message notification condition indicated by the message notification condition data received by said receiving means is satisfied, and
said transmitting means is arranged to transmit the message created by said message creating means to the corresponding destination, based on the destination data received by said receiving means.

10. The communication controller according to claim 7, wherein
said data sending means is arranged to send the data for enabling the user of the computer to select one of a plurality of message notification conditions respectively corresponding to the plurality of destinations,
said receiving means is arranged to receive a plurality of message notification condition data indicating the plurality of message notification conditions respectively corresponding to the plurality of destinations selected by the user of the computer,
said message creating means is arranged to create a plurality of messages respectively corresponding to the plurality of destinations in a case where the plurality of message notification condition respectively indicated by the plurality of message notification condition data received by said receiving means are satisfied, and
said transmitting means is arranged to transmit the plurality of messages created by said message creating means to the plurality of corresponding destinations, respectively based on the plurality of destination data received by said receiving means.

11. A communication apparatus (105) connected to a computer (101) via a network, comprising:
data sending means (204) for sending, to the computer via the network, data for enabling a user of the computer, by using a browsing software running on the computer, to input a destination to which a message is to be transmitted from said communication apparatus, and to select one of a plurality of languages which are available in said communication apparatus to create the message, in response to a request from the computer to send the data;
receiving means (204) for receiving, from the computer via the network, destination data indicating a destination input by the user in the browsing software and language data indicating a language selected by the user based on the data sent to the computer by the data sending unit;
message creating means (201) for creating a message, based on obtained information concerning a status of said communication apparatus, in the language indicated by the language data received by said receiving unit; and
transmitting means (204) for transmitting the message created by said message creating unit to the destination via the network based on the destination data received by said receiving unit.

12. A communication controller as claimed in any of claims 1 to 10 or a communication apparatus as claimed in claim 11, wherein the data sending means, receiving means, and transmitting means are provided by a LAN controller.

13. A transmission method for a communication controller (106) for controlling communication between an apparatus (107) and a computer (101) via a network, comprising the steps of:
sending, to the computer via the network, data for enabling a user of the computer, by using a browsing software running on the computer, to input a destination to which a message is to be transmitted from said apparatus, and to select one of a plurality of languages which are available in the apparatus to create the message, in response to a request from the computer to send the data;
receiving, from the computer via the network, destination data indicating a destination input by the user in the browsing software and language data indicating a language selected by the user based on the data sent to the computer by the data sending step;
creating a message, based on obtained information concerning a status of said apparatus, in the language indicated by the language data received in said receiving step; and
transmitting the message created in said message creating step to the destination via the network based on the destination data received in said receiving step.

14. A program for a communication controller (106) for controlling communication between an apparatus (107) and a computer (101) via a network, the program comprising:
a data sending step (S2102) of sending, to the computer via the network, data for enabling a user of the computer, by using a browsing software running on the computer, to input a destination to which a message is to be transmitted from said apparatus, and to select one of a plurality of languages which are available in the apparatus to create the message, in response to a request from the computer to send the data;
a receiving step (S2103) of receiving, from the computer via the network, destination data indicating a destination input by the user in the browsing software and language data indicating a language selected by the user based on the data sent to the computer by the data sending step;
a message creating step (S1201-S1204) of creating a message, based on obtained information concerning a status of said apparatus, in the language indicated by the language data received in said receiving step; and
a transmitting step (S2501-S2510) of transmitting the message created in said message creating step to the destination via the network based on the destination data received in said receiving step.

## Patentansprüche

1. Kommunikationssteuerung (106) zum Steuern von Kommunikation zwischen einer Vorrichtung (107) und einem Computer (101) über ein Netz, umfassend:
Datensendeeinrichtung (204) zum Senden von Daten an den Computer über das Netz, um es einem Benutzer des Computers zu ermöglichen, unter Verwendung einer auf dem Computer laufenden Browsersoftware einen Zielort einzugeben, an den eine Nachricht von der Kommunikationssteuerung zu übertragen ist, und eine aus mehreren in der Kommunikationssteuerung verfügbaren Sprachen auszuwählen zum Erzeugen der Nachricht als Antwort auf eine Anforderung vom Computer, die Daten zu senden;
Empfangseinrichtung (204) zum Empfangen, vom Computer über das Netz, von vom Benutzer in der Browsersoftware eingegebenen einen Zielort angebenden Zielortdaten und von eine vom Benutzer ausgewählte Sprache angebenden Sprachdaten, basierend auf den durch die Datensendeeinrichtung an den Computer gesendeten Daten;
Erhalteeinrichtung (205) zum Erhalten von Information über einen Status der Vorrichtung;
Nachrichterzeugungseinrichtung (102) zum Erzeugen einer Nachricht basierend auf der durch die Erhalteeinrichtung erhaltenen Information in der durch die von der Empfangseinrichtung empfangenen Sprachdaten angegeben Sprache; und
Übertragungseinrichtung (204) zum Übertragen der durch die Nachrichterzeugungseinrichtung erzeugten Nachricht an den Zielort über das Netz basierend auf den durch die Empfangseinrichtung empfangenen Zielortdaten.

2. Kommunikationssteuerung nach Anspruch 1, wobei die Nachrichterzeugungseinrichtung ausgebildet ist, basierend auf der durch die Erhalteeinrichtung erhaltenen Information einen vorab vorbereiteten Satz in die Nachricht einzufügen.

3. Kommunikationssteuerung nach Anspruch 1 oder 2, wobei die Steuerung eine an der Vorrichtung angebrachte Netzkarte ist.

4. Kommunikationssteuerung nach einem der Ansprüche 1 bis 3, wobei die Nachricht eine E-Mail-Nachricht ist.

5. Kommunikationssteuerung nach einem der Ansprüche 1 bis 4, wobei die Browsersoftware ein Web-Browser ist und die durch die Datensendeeinrichtung gesendeten Daten in Hyper-Text Markup-Sprache beschrieben sind.

6. Kommunikationssteuerung nach einem der Ansprüche 1 bis 5, wobei die Datensendeeinrichtung ausgebildet ist, Daten zu senden, um es der Browsersoftware zu ermöglichen, einen Bildschirm anzuzeigen, an dem der Benutzer die Sprache aus einer Liste auswählen, den Zielort der Nachricht eingeben und eine Bedingung aus einer Liste mehrerer Bedingungen, mit denen die Nachricht zu übertragen ist, auswählen kann, wobei die Empfangseinrichtung ausgebildet ist, die Sprachdaten, den vom Benutzer eingegebenen Zielort angebenden Zielortdaten und die vom Benutzer ausgewählte Bedingung angebenden Bedingungsdaten zu empfangen, und wobei die Übertragungseinrichtung ausgebildet ist, die von der Nachrichterzeugungseinrichtung erzeugte Nachricht an den durch die von der Empfangseinrichtung empfangenen Zielortdaten angegebenen Zielort zu übertragen, falls die durch die Erhalteeinrichtung erhaltene Information die durch die von der Empfangseinrichtung empfangenen Bedingungsdaten angegebene Bedingung erfüllt.

7. Kommunikationssteuerung nach einem der Ansprüche 1 bis 6, wobei
die Datensendeeinrichtung ausgebildet ist, die Daten zu senden, um es dem Benutzer des Computers zu ermöglichen, mehrere Zielorte einzugeben,
die Empfangseinrichtung ausgebildet ist, mehrere Zielortdaten zu empfangen, die jeweils mehrere vom Benutzer des Computers eingegebene Zielorte angeben, und
die Übertragungseinrichtung ausgebildet ist, die durch die Nachrichterzeugungseinrichtung erzeugte Nachricht an die mehreren Zielorte zu übertragen, jeweils basierend auf den von der Empfangseinrichtung empfangenen mehreren Zielortdaten.

8. Kommunikationssteuerung nach Anspruch 7, wobei die Datensendeeinrichtung ausgebildet ist, die Daten zu senden, um es dem Benutzer des Computers zu ermöglichen, entsprechend den mehreren Zielorten jeweils eine aus mehreren Sprachen auszuwählen,
die Empfangseinrichtung ausgebildet ist, mehrere Sprachdaten zu empfangen, die mehrere durch den Benutzer des Computers jeweils entsprechend den mehreren Zielorten ausgewählte Sprachen angeben,
die Nachrichterzeugungseinrichtung ausgebildet ist, mehrere Nachrichten zu erzeugen, jeweils entsprechend den mehreren Zielorten in den jeweils durch die von der Empfangseinrichtung empfangenen mehreren Sprachdaten angegebenen mehreren Sprachen, und
die Übertragungseinrichtung ausgebildet ist, die mehreren durch die Nachrichterzeugungseinrichtung erzeugten Nachrichten an die jeweiligen mehreren entsprechenden Zielorte zu übertragen, jeweils basierend auf den durch die Empfangseinrichtung empfangenen mehreren Zielortdaten.

9. Kommunikationssteuerung nach einem der Ansprüche 1 bis 8, wobei
die Datensendeeinrichtung ausgebildet ist, die Daten zu senden, um es einem Benutzer des Computers zu ermöglichen, eine aus mehreren Nachrichtmeldebedingungen auszuwählen,
die Empfangseinrichtung ausgebildet ist, Nachrichtmeldebedingungsdaten zu empfangen, welche die vom Benutzer des Computers ausgewählte Nachrichtmeldebedingung angibt,
die Nachrichterzeugungseinrichtung ausgebildet ist, die Nachricht zu erzeugen entsprechend dem Zielort, falls die durch die von der Empfangseinrichtung empfangenen Nachrichtmeldebedingungsdaten angezeigte Nachrichtmeldebedingung erfüllt wird, und
die Übertragungseinrichtung ausgebildet ist, basierend auf den durch die Empfangseinrichtung empfangenen Zielortdaten die durch die Nachrichterzeugungseinrichtung erzeugte Nachricht an den entsprechenden Zielort zu übertragen.

10. Kommunikationssteuerung nach Anspruch 7, wobei die Datensendeeinrichtung ausgebildet ist, die Daten zu senden, um es dem Benutzer des Computers zu ermöglichen, entsprechend den mehreren Zielorten jeweils eine aus mehreren Nachrichtmeldebedingungen auszuwählen,
die Empfangseinrichtung ausgebildet ist, mehrere Nachrichtmeldebedingungsdaten zu empfangen, die die mehreren durch den Benutzer des Computers jeweils entsprechend den mehreren Zielorten ausgewählten Nachrichtmeldebedingungen angeben,
die Nachrichterzeugungseinrichtung ausgebildet ist, mehrere Nachrichten zu erzeugen, jeweils entsprechend den mehreren Zielorten, falls die mehreren jeweils durch die von der Empfangseinrichtung empfangenen mehreren Nachrichtmeldebedingungsdaten angegebenen Nachrichtmeldebedingungen erfüllt werden, und
die Übertragungseinrichtung ausgebildet ist, die mehreren durch die Nachrichterzeugungseinrichtung erzeugten Nachrichten an die mehreren entsprechenden Zielorte zu übertragen, jeweils basierend auf den mehreren von der Empfangseinrichtung empfangenen Zielortdaten.

11. Kommunikationsvorrichtung (105), verbunden mit einem Computer (101) über ein Netz, umfassend:
Datensendeeinrichtung (204) zum Senden von Daten an den Computer über das Netz, um es einem Benutzer des Computers zu ermöglichen, unter Verwendung einer auf dem Computer laufenden Browsersoftware einen Zielort einzugeben, an den eine Nachricht von der Kommunikationsvorrichtung zu übertragen ist, und eine aus mehreren in der Kommunikationsvorrichtung verfügbaren Sprachen auszuwählen zum Erzeugen der Nachricht als Antwort auf eine Anforderung vom Computer, die Daten zu senden;
Empfangseinrichtung (204) zum Empfangen, vom Computer über das Netz, von vom Benutzer in der Browsersoftware eingegebenen einen Zielort angebenden Zielortdaten und von eine vom Benutzer ausgewählte Sprache angebenden Sprachdaten, basierend auf den an den Computer durch die Datensendeeinrichtung gesendeten Daten;
Nachrichterzeugungseinrichtung (201) zum Erzeugen einer Nachricht basierend auf erhaltener Information über einen Status der Kommunikationsvorrichtung in der durch die von der Empfangseinrichtung empfangenen Sprachdaten angegebenen Sprache; und
Übertragungseinrichtung (204) zum Übertragen der durch die Nachrichterzeugungseinrichtung erzeugten Nachricht an den Zielort über das Netz basierend auf den durch die Empfangseinrichtung empfangenen Zielortdaten.

12. Kommunikationssteuerung nach einem der Ansprüche 1 bis 10 oder Kommunikationsvorrichtung nach Anspruch 11, wobei die Datensendeeinrichtung, die Empfangseinrichtung und die Übertragungseinrichtung durch eine LAN-Steuerung bereitgestellt werden.

13. Übertragungsverfahren für eine Kommunikationssteuerung (106) zum Steuern von Kommunikation zwischen einer Vorrichtung (107) und einem Computer (101) über ein Netz, umfassend die folgenden Schritte:
Senden von Daten an den Computer über das Netz, um es einem Benutzer des Computers zu ermöglichen, unter Verwendung einer auf dem Computer laufenden Browsersoftware einen Zielort einzugeben, an den eine Nachricht von der Vorrichtung zu übertragen ist, und eine aus mehreren in der Vorrichtung verfügbaren Sprachen auszuwählen zum Erzeugen der Nachricht als Antwort auf eine Anforderung vom Computer, die Daten zu senden;
Empfangen, vom Computer über das Netz, von vom Benutzer in der Browsersoftware eingegebenen einen Zielort angebenden Zielortdaten und von eine vom Benutzer ausgewählte Sprache angebenden Sprachdaten, basierend auf den an den Computer durch den Datensendeschritt gesendeten Daten;
Erzeugen einer Nachricht basierend auf erhaltener Information über einen Status der Vorrichtung in der durch die im Empfangsschritt empfangenen Sprachdaten angegebenen Sprache; und
Übertragen der im Nachrichterzeugungsschritt erzeugten Nachricht an den Zielort über das Netz basierend auf den im Empfangsschritt empfangenen Zielortdaten.

14. Programm für eine Kommunikationssteuerung (106) zum Steuern von Kommunikation zwischen einer Vorrichtung (107) und einem Computer (101) über ein Netz, wobei das Programm umfasst:
einen Datensendeschritt (S2102) zum Senden von Daten an den Computer über das Netz, um es einem Benutzer des Computers zu ermöglichen, unter Verwendung einer auf dem Computer laufenden Browsersoftware einen Zielort einzugeben, an den eine Nachricht von der Vorrichtung zu übertragen ist, und eine aus mehreren in der Vorrichtung verfügbaren Sprachen auszuwählen zum Erzeugen der Nachricht als Antwort auf eine Anforderung vom Computer, die Daten zu senden;
einen Empfangsschritt (S2103) zum Empfangen, vom Computer über das Netz, von vom Benutzer in der Browsersoftware eingegebenen einen Zielort angebenden Zielortdaten und von eine vom Benutzer ausgewählte Sprache angebenden Sprachdaten, basierend auf den an den Computer durch den Datensendeschritt gesendeten Daten;
einen Nachrichterzeugungsschritt (S1201-S1204) zum Erzeugen einer Nachricht basierend auf erhaltener Information über einen Status der Vorrichtung in der durch die im Empfangsschritt empfangenen Sprachdaten angegebenen Sprache; und
einen Übertragungsschritt (S2501-S2510) zum Übertragen der im Nachrichterzeugungsschritt erzeugten Nachricht an den Zielort über das Netz basierend auf den im Empfangsschritt empfangenen Zielortdaten.

## Revendications

1. Contrôleur de communication (106) destiné à commander la communication entre un appareil (107) et un ordinateur (101) via un réseau, comprenant :
un moyen d'envoi de données (204) destiné à envoyer à l'ordinateur, via le réseau, des données devant permettre à un utilisateur de l'ordinateur, à l'aide d'un logiciel de navigation tournant sur l'ordinateur, de saisir une destination à laquelle un message doit être envoyé par ledit contrôleur de communication et de sélectionner une langue parmi une pluralité de langues qui sont disponibles sur le contrôleur de communication pour créer le message, en réponse à une demande provenant de l'ordinateur d'envoyer les données ;
un moyen de réception (204) destiné à recevoir en provenance de l'ordinateur, via le réseau, des données de destination indiquant une destination saisie par l'utilisateur dans le logiciel de navigation et des données de langue indiquant une langue sélectionnée par l'utilisateur, en fonction des données envoyées à l'ordinateur par le moyen d'envoi de données ;
un moyen d'obtention (205) destiné à obtenir des informations concernant un état de l'appareil ;
un moyen de création de messages (102) destiné à créer un message, en fonction des informations obtenues par ledit moyen d'obtention, dans la langue indiquée par les données de langue reçues par ledit moyen de réception ; et
un moyen d'émission (204) destiné à émettre le message créé par ledit moyen de création de messages vers la destination, via le réseau, en fonction des données de destination reçues par ledit moyen de réception.

2. Contrôleur de communication selon la revendication 1, dans lequel ledit moyen de création de messages est conçu pour insérer dans le message une phrase préparée à l'avance, en fonction des informations obtenues par ledit moyen d'obtention.

3. Contrôleur de communication selon la revendication 1 ou 2, dans lequel ledit contrôleur est une carte de réseau montée sur l'appareil.

4. Contrôleur de communication selon l'une quelconque des revendications 1 à 3, dans lequel le message est un message de courriel.

5. Contrôleur de communication selon l'une quelconque des revendications 1 à 4, dans lequel le logiciel de navigation est un navigateur web et les données envoyées par ledit moyen d'envoi de données sont décrites dans le langage de balisage hypertextuel.

6. Contrôleur de communication selon l'une quelconque des revendications 1 à 5, dans lequel ledit moyen d'envoi de données est conçu pour envoyer des données qui permettent au logiciel de navigation d'afficher un écran dans lequel l'utilisateur peut sélectionner une langue dans une liste, saisir une destination du message et sélectionner dans une liste comprenant une pluralité de conditions une condition à laquelle le message doit être émis, dans lequel ledit moyen de réception est conçu pour recevoir les données de langue, des données de destination indiquant la destination saisie par l'utilisateur et des données de condition indiquant la condition sélectionnée par l'utilisateur, dans lequel ledit moyen d'émission est conçu pour émettre le message créé par ledit moyen de création de messages vers la destination indiquée par les données de destination reçues par ledit moyen de réception si les informations obtenues par ledit moyen d'obtention satisfont la condition indiquée par les données de condition reçues par ledit moyen de réception.

7. Contrôleur de communication selon l'une quelconque des revendications 1 à 6, dans lequel :
ledit moyen d'envoi de données est conçu pour envoyer les données devant permettre à l'utilisateur de l'ordinateur de saisir une pluralité de destinations ;
ledit moyen de réception est conçu pour recevoir une pluralité de données de destination indiquant respectivement une pluralité de destinations saisies par l'utilisateur de l'ordinateur ; et
ledit moyen d'émission est conçu pour émettre le message créé par ledit moyen de création de messages vers la pluralité de destinations fondées, respectivement, sur la pluralité de données de destination reçues par ledit moyen de réception.

8. Contrôleur de communication selon la revendication 7, dans lequel :
ledit moyen d'envoi de données est conçu pour envoyer les données devant permettre à l'utilisateur de l'ordinateur de sélectionner une langue sur une pluralité de langues correspondant respectivement à une pluralité de destinations ;
ledit moyen de réception est conçu pour recevoir une pluralité de données de langue indiquant une pluralité de langues correspondant respectivement à la pluralité de destinations saisies par l'utilisateur de l'ordinateur ;
ledit moyen de création de messages est conçu pour créer la pluralité de messages correspondant respectivement à la pluralité de destinations dans la pluralité de langues indiquées respectivement par la pluralité de données de langue reçues par ledit moyen de réception ; et
ledit moyen d'émission est conçu pour émettre la pluralité de messages créés par ledit moyen de création de messages en se fondant respectivement sur la pluralité de données de destination reçues par ledit moyen de réception, vers la pluralité de destinations correspondantes, respectivement.

9. Contrôleur de communication selon l'une quelconque des revendications 1 à 8, dans lequel :
ledit moyen d'envoi de données est conçu pour envoyer les données devant permettre à l'utilisateur de l'ordinateur de sélectionner une condition parmi une pluralité de conditions de notification de message ;
ledit moyen de réception est conçu pour recevoir des données de condition de notification de message indiquant la condition de notification de message sélectionnée par l'utilisateur de l'ordinateur ;
ledit moyen de création de messages est conçu pour créer le message correspondant à la destination lorsque la condition de notification de message indiquée par les données de condition de notification de message reçues par ledit moyen de réception est satisfaite ; et
ledit moyen d'émission est conçu pour émettre le message créé par ledit moyen de création de messages vers la destination correspondante, en fonction des données de destination reçues par ledit moyen de réception.

10. Contrôleur de communication selon la revendication 7, dans lequel :
ledit moyen d'envoi de données est conçu pour envoyer les données devant permettre à l'utilisateur de l'ordinateur de sélectionner une condition parmi une pluralité de conditions de notification de message correspondant respectivement à la pluralité de destinations ;
ledit moyen de réception est conçu pour recevoir une pluralité de données de condition de notification de message indiquant la pluralité de conditions de notification de message correspondant respectivement à la pluralité de destinations sélectionnées par l'utilisateur de l'ordinateur ;
ledit moyen de création de messages est conçu pour créer une pluralité de messages correspondant respectivement à la pluralité de destinations lorsque la pluralité de conditions de notification de message indiquées respectivement par la pluralité de données de condition de notification de message reçues par ledit moyen de réception sont satisfaites ; et
ledit moyen d'émission est conçu pour émettre la pluralité de messages créés par ledit moyen de création de messages vers la pluralité de destinations correspondantes, en fonction respectivement de la pluralité de données de destination reçues par ledit moyen de réception.

11. Appareil de communication (105) connecté à un ordinateur (101) via un réseau, comprenant :
un moyen d'envoi de données (204) destiné à envoyer à l'ordinateur, via le réseau, des données devant permettre à un utilisateur de l'ordinateur, à l'aide d'un logiciel de navigation tournant sur l'ordinateur, de saisir une destination à laquelle un message doit être envoyé à partir dudit appareil de communication et de sélectionner une langue parmi une pluralité de langues qui sont disponibles sur ledit appareil de communication pour créer le message, en réponse à une demande provenant de l'ordinateur d'envoyer les données ;
un moyen de réception (204) destiné à recevoir en provenance de l'ordinateur, via le réseau, des données de destination indiquant une destination saisie par l'utilisateur dans le logiciel de navigation et des données de langue indiquant une langue sélectionnée par l'utilisateur, en fonction des données envoyées à l'ordinateur par l'unité d'envoi de données ;
un moyen de création de messages (201) destiné à créer un message, en fonction des informations obtenues qui concernent un état dudit appareil de communication, dans la langue indiquée par les données de langue reçues par ladite unité de réception ; et
un moyen d'émission (204) destiné à émettre le message créé par ladite unité de création de messages vers la destination, via le réseau, en fonction des données de destination reçues par ladite unité de réception.

12. Contrôleur de communication selon l'une quelconque des revendications 1 à 10 ou appareil de communication selon la revendication 11, dans lequel le moyen d'envoi de données, le moyen de réception et le moyen d'émission sont fournis par un contrôleur de réseau local.

13. Procédé d'émission employé par un contrôleur de communication (106) pour commander la communication entre un appareil (107) et un ordinateur (101), via un réseau, comprenant les étapes consistant à :
envoyer à l'ordinateur, via le réseau, des données devant permettre à un utilisateur de l'ordinateur, à l'aide d'un logiciel de navigation tournant sur l'ordinateur, de saisir une destination à laquelle un message doit être envoyé, à partir dudit appareil, et de sélectionner une langue parmi une pluralité de langues qui sont disponibles sur l'appareil pour créer le message, en réponse à une demande provenant de l'ordinateur d'envoyer les données ;
recevoir en provenance de l'ordinateur, via le réseau, des données de destination indiquant une destination saisie par l'utilisateur dans le logiciel de navigation et des données de langue indiquant une langue sélectionnée par l'utilisateur, en fonction des données envoyées à l'ordinateur dans l'étape d'envoi de données ;
créer un message, en fonction d'informations obtenues concernant un état dudit appareil, dans la langue indiquée par les données de langue reçues dans ladite étape de réception ; et
émettre le message créé dans ladite étape de création de message vers la destination, via le réseau, en fonction des données de destination reçues dans ladite étape de réception.

14. Programme destiné à un contrôleur de communication (106) pour commander la communication entre un appareil (107) et un ordinateur (101), via un réseau, le programme comprenant :
une étape d'envoi de données (S2102) consistant à envoyer à l'ordinateur, via le réseau, des données devant permettre à un utilisateur de l'ordinateur, à l'aide d'un logiciel de navigation tournant sur l'ordinateur, de saisir une destination à laquelle un message doit être envoyé, à partir dudit appareil, et de sélectionner une langue parmi une pluralité de langues qui sont disponibles sur l'appareil pour créer le message, en réponse à une demande provenant de l'ordinateur d'envoyer les données ;
une étape de réception (S2103) consistant à recevoir en provenance de l'ordinateur, via le réseau, des données de destination indiquant une destination saisie par l'utilisateur dans le logiciel de navigation et des données de langue indiquant une langue sélectionnée par l'utilisateur, en fonction des données envoyées à l'ordinateur dans l'étape d'envoi de données ;
une étape de création de message (S1201 à S1204) consistant à créer un message, en fonction d'informations obtenues concernant un état dudit appareil, dans la langue indiquée par les données de langue reçues dans ladite étape de réception ; et
une étape d'émission (S2501 à S2510) consistant à émettre le message créé dans ladite étape de création de message vers la destination, via le réseau, en fonction des données de destination reçues dans ladite étape de réception.
